Europäisches Patentamt

(19) European Patent Office

Office européen des brevets

(11) Publication number: **0 160 425**
**A2**

# (12) EUROPEAN PATENT APPLICATION

(21) Application number: 85302434.7

(22) Date of filing: 04.04.85

(51) Int. Cl.⁴: **B 29 C 65/16**
B 29 C 65/56, B 23 K 26/00

(30) Priority: 25.04.84 JP 84616/84

(43) Date of publication of application:
06.11.85 Bulletin 85/45

(84) Designated Contracting States:
DE FR GB

(71) Applicant: TOYOTA JIDOSHA KABUSHIKI KAISHA
1, Toyota-cho Toyota-shi
Aichi-ken 471(JP)

(72) Inventor: Terasawa, Toshihisa
3-Chome 33 Aizuma-cho
Toyota-shi Aichi-ken(JP)

(74) Representative: Brock, Peter William et al,
Michael Burnside & Partners 2 Serjeants' Inn Fleet Street
London EC4Y 1HL(GB)

(54) A process for joining different kinds of synthetic resins.

(57) A process for joining a first plate (10) to a second plate (20) includes several steps. A first step provides a first plate (10) made of a first kind of synthetic resin. A second step is setting a second plate (20) having a hole and formed of metal or a synthetic resin on the first plate (10). A third step is setting an insertion (60) within the hole of the second plate (20) into contact with a portion (11) of the first plate (10). The insertion (60) is made of glass or a second kind of synthetic resin which can transmit the laser beam. The fourth step is exposing the insertion (60) to a laser beam which transmits the laser beam to the first plate (10). The first kind of synthetic resin of the portion of the first plate (10) stores up heat of the laser beam, so that the portion (11) of the first plate (10) is melted by the heat of the laser beam. A fifth step is pressing the insertion (60) into the first kind of synthetic resin melted from the first plate (10). The first kind of synthetic resin melted from the first plate (10) thereby is pushed out from the hole of the second plate (20) onto an outer surface (40) of the second plate (20) to form a lip ring (13) of the first kind of synthetic resin. Accordingly, the lip ring (13) links the first plate (10) to the second plate (20).

FiG 3.

EP 0 160 425 A2

0160425

## A PROCESS FOR JOINING DIFFERENT
## KINDS OF SYNTHETIC RESINS

The present invention relates to a process for joining differing kinds of synthetic resins or other materials to each other, and more particularly to a process for joining them using the heat of a laser beam.

In a first conventional process for physically joining synthetic resins, each of the synthetic resins has a contact surface thereon. A metal mesh is disposed on the contact surfaces of the synthetic resins, and the mesh is sandwiched between both of the synthetic resins. When the mesh is heated, both of the contact surfaces of the synthetic resins are melted by the heat of the mesh. Pressure then is applied to the outsides of the synthetic resins to press them together, and the synthetic resins are cooled. As a result of this first conventional process, one of the synthetic resins is joined to the other of the synthetic resins.

In this first conventional process, both synthetic resins normally are the same kind of synthetic resins so that both will have the same melting point, and so that both will blend easily into one another. If different kinds of synthetic resins are used, they may have differing melting points and may not blend easily into one another.

Further, in the first conventional process, a connecting wire is disposed between both of the contact surfaces of the synthetic resins to supply electricity to heat the mesh. Connecting the wire to the mesh between the synthetic resins requires an undesirably high amount of manual labor.

In a second conventional process for chemically joining synthetic resins, each of the synthetic resins has a contact surface thereon, and a bonding compound is disposed between both of the contact surfaces of the synthetic resins. The bonding compound normally is solid and is melted by heat, typically produced by applying high frequency or supersonic waves to the bonding compound. These waves also preferably melt the synthetic resins slightly to improve bonding. After a compressive force is applied to the synthetic resins, the synthetic resins are cooled. As a result of the second conventional process, one of the synthetic resins is joined to the other.

In the second conventional process, the synthetic resins again should be the same kind of synthetic resin, this time so that the bonding compound has the same adhesive property as to both synthetic resins. If different kinds of synthetic resins are used, the bonding compound may have differing adhesive properties as to the different kinds of synthetic resin. Accordingly, the adhesive strength of the bond to one kind of synthetic resin may be different from the adhesive strength of the bond to a different kind of synthetic resin, i. e., one bond may have a weak adhesive strength. Further, in the second conventional process with different synthetic resins, the synthetic resins may not both be melted by the heat of the high frequency or supersonic waves.

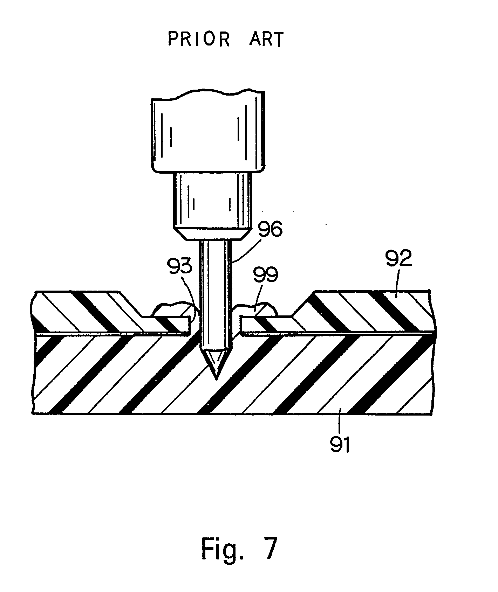

FIG. 7 shows a third conventional process for mechanically joining different kinds of synthetic resins. As shown in FIG. 7, a second plate 92 is mounted on a first plate 91. The first plate 91 is made of styrene acrylonitrile copolymer reinforced with glass filler, and the second plate 92 is made of polypropylene resin. The second plate 92 has a hole 93. A soldering iron 96 is inserted through the hole 93 of the second plate 92 into the first plate 91, and the first plate 91 is melted by the heat of the soldering iron 96. The melted first plate 91 is pushed out from the hole 93 of the second plate 92 by the soldering iron 96, forming a lip ring 99 of the first plate 91 on an outer surface of the second plate 92. By further application of the soldering iron 96, the lip ring 99 of the first plate 91 can be linked to the second plate 92.

However, a part of the first plate 91 often sticks to the soldering iron 96 after the soldering iron 96 is drawn out from the first plate 91, which should be removed from the soldering iron 96 before it is used again. All of these steps are labor intensive.

The present invention has been developed in view of the facts as described above, and its object is to provide a process for joining securely a second plate to a first plate which is made of a first kind of synthetic resin.

To accomplish the above-described object, a process for joining the first plate to the second plate includes several steps.

A first step includes providing a first plate made of a first kind of synthetic resin which can store up (absorb) the heat of a laser beam.

A second step includes setting the second plate on the first plate. The second plate has an inner peripheral edge defining a hole therein, with a portion of the first plate within the hole.

A third step includes setting an insertion on the portion of the first plate within the hole. The insertion is made of glass or a second kind of synthetic resin which can transmit the laser beam.

A fourth step includes exposing the portion of the first plate to a laser beam through the insertion. The first kind of synthetic resin of the first plate stores up the heat of the laser beam, and the portion of the first plate is melted.

A fifth plate includes pressing the insertion into the first kind of synthetic resin melted from the first plate. The diameter of the end of the insertion is smaller than the diameter of the hole of the second plate, so that a space is formed between the insertion and the inner peripheral edge of the second plate. The first kind of synthetic resin melted from the first plate is pushed out through the space onto an outer surface of said second plate. As a result, a lip ring of the first kind of synthetic resin is formed.

Several spots of a contact surface of the insertion with the first plate also are melted by the heat which is stored up in the first plate, and a plurality of recesses are formed on the contact surface of the insertion. The first kind of synthetic resin melted from the first plate intrudes into the plurality of the recesses on the contact surface of the insertion, and a plurality of projections are formed on the portion of the first plate. Accordingly, the first plate has a lip ring engaging the outer surface of the second plate, and a plurality of the recesses of the contact surface of the insertion engaging with a plurality of the projections of the portion of the first plate, so that the first plate is joined securely to the second plate.

Other objects and novel features of this invention will become more apparent from the description which follows, taken in conjunction with the accompanying drawings, and in which:

FIG. 1 is a cross-sectional view showing a third step of a first embodiment of a process according to the present invention;

FIG. 2 is a cross-sectional view showing a fourth step of the process;

FIG. 3 is a cross-sectional view showing a fifth step of the process;

FIG. 4 is a cross-sectional view showing a sixth step of the process;

FIG. 5 is a diagram showing the transmittance of 20 wt% glass filler reinforced styrene acrylonitrile copolymer with 0.1 wt% carbon black;

FIG. 6 is a diagram showing the transmittance of polypropylene without any additives; and

FIG. 7 is a cross-sectional view showing a third conventional process.

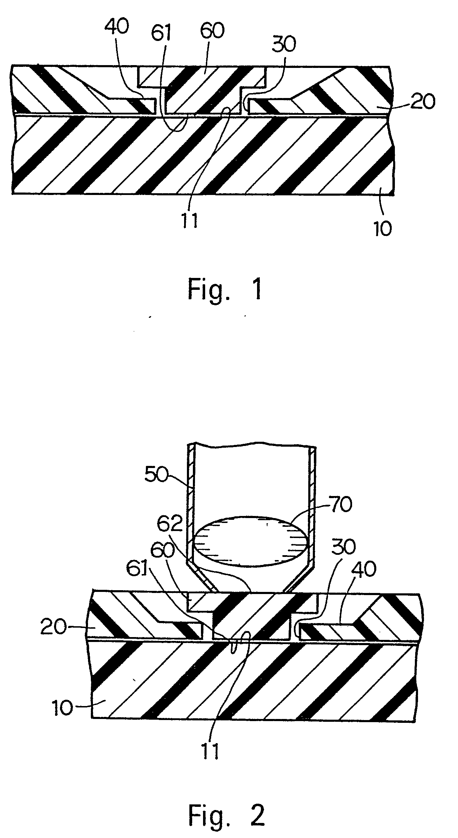

Referring to FIG. 1, a first step of a process for joining different kinds of synthetic resins or other materials includes providing a first plate 10 made of a first kind of synthetic resin which can store up (absorb) the heat of a laser beam. For example, the first kind of synthetic resin may be styrene acrylonitrile copolymer reinforced with 20 wt% glass filler, and including 0.1 wt% carbon black as an additive. The first plate 10 of this composition is black.

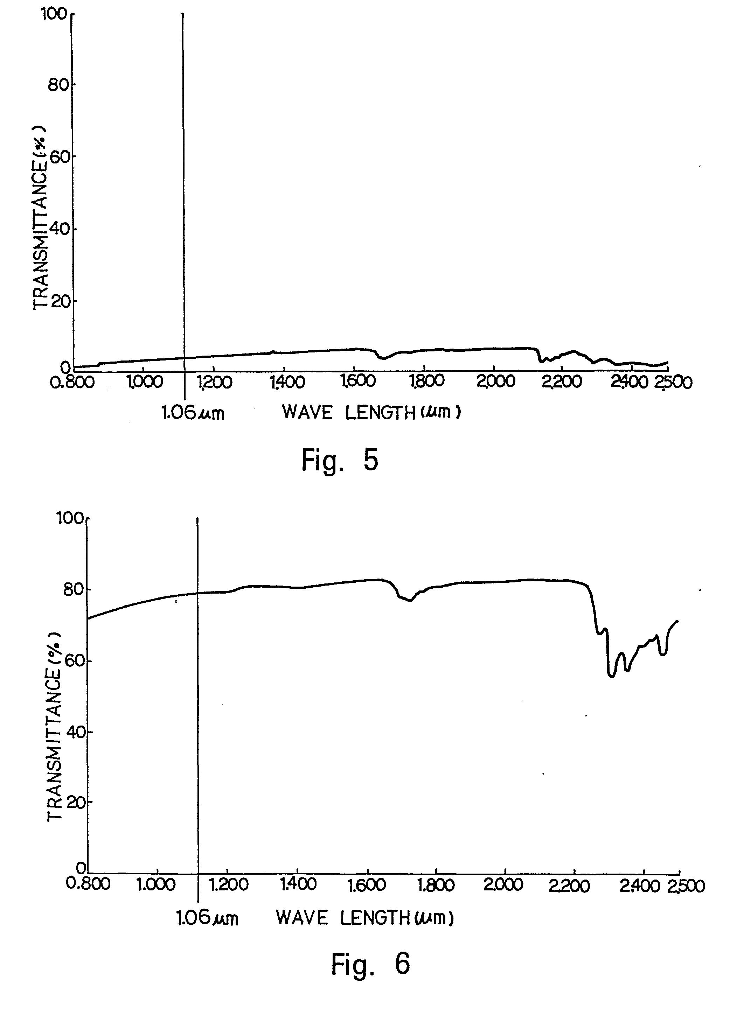

As shown in FIG. 5, the reinforced styrene acrylonitrile copolymer can transmit only a little of a $Nd:YAG(Nd^{+3}:Y_3Al_5O_{12})$ laser beam. When the wavelength of the laser beam is $1.06\mu m$, the reinforced styrene acrylonitrile copolymer can transmit about 4% of a total amount of the Nd:YAG laser beam. Therefore, the reinforced styrene acrylonitrile copolymer can store up most of the heat of the total amount of the laser beam. Alternatively, the first kind of synthetic resin may be polypropylene resin which includes carbon black as an absorptive additive.

A second step of the process includes setting a second plate 20 on the first plate 10 which is made of a second kind of synthetic resin or other material. The second plate 20 has an inner peripheral edge 30 which defines a hole therein.

If the second plate 20 is made of a second kind of synthetic resin, it preferably is one which can transmit most of the laser beam. For example, the second kind of synthetic resin may be polypropylene resin without any absorptive additives. The color of such a plate 20 is milky white. As shown in FIG. 6, when the wavelength of the Nd:YAG laser beam is $1.06 \mu m$, the polypropylene resin without any absorptive additives can transmit about 75% of the total amount of the Nd:YAG laser beam. Accordingly, the second plate 20 cannot store up the heat of the Nd:YAG laser beam. Alternatively, the second kind of synthetic resin may be styrene acrylonitrile copolymer, poryethylene, vinyl chloride, 6-nylon resin or 66-nylon resin, all without any absorptive additives.

Alternatively, the second plate 20 may be made of metal instead of the second kind of synthetic resin including steel, nickel, aluminum and copper.

A third step of the process includes setting an insertion 60 on a portion 11 of the first plate 10 within the hole of the second plate 20. A contact surface 61 of the insertion 60 is in contact with the portion 11 of the first plate 10. The diameter of the insertion 60 is smaller than the diameter of the inner peripheral edge 30 of the second plate 20, so that a space is defined between the insertion 60 and the inner peripheral edge 30 of the second plate 20. The insertion 60 is made of the second kind of synthetic resin, which transmit the laser beam. For example, the insertion 60 may be made of polypropylene without any absorptive additives. Such an insertion 60 can transmit most of the total amount of the laser beam whose wavelength is $1.06 \mu m$ and less. Alternatively, the insertion may be made of styrene acrylonitrile copolymer or glass.

As shown in FIG. 2, a fourth step of the process includes setting a nozzle 50 of the laser beam on an top surface 62 of the insertion 60 and exposing the top surface 62 to the laser beam. The laser beam radiates from the nozzle 50 through a convex lens 70, and the insertion 60 transmits the laser beam, thereby exposing the portion 11 of the first plate 10 to the laser beam.

The laser beam is dispersed in the insertion 60 during transmission. The laser beam therefore concentrates on a plurality of spots of the portion 11 of the first plate 10. Accordingly, a plurality of the spots of the portion 11 of the first plate 10 store up the heat of the laser beam and are melted. A plurality of spots of the contact surface 61 of the insertion 60 which face the plurality of the spots of the portion 11 of the first plate 10 also are melted by the heat which is stored up in the first plate 10. As a result, a plurality of recesses are formed on the contact surface 61 of the insertion 60, and the melted portion 11 of the first kind of synthetic resin of the first plate 10 intrudes into the plurality of the recesses.

Alternatively, the end of the nozzle 50 may be above but not in contact with the top surface 62 of the insertion 60.

With the preferred resins, the most suitable laser beam is a Nd:YAG laser beam, however, other laser beams may be used, including: Nd:glass laser beam; ruby laser beam; helium:neon (He:Ne) gas laser beam; krypton (Kr) gas laser beam; argon (Ar) gas laser beam; hydrogen ($H_2$) gas laser beam and nitrogen ($N_2$) gas laser beam.

With the preferred resins, a suitable wavelength of the laser beam for joining different kinds of synthetic resins is about 1.06 μm and less. When a wavelength of the laser beam is more than 1.06 μm, the insertion 60 cannot transmit the laser beam.

With the preferred resins, the laser beam should be from 5W through 100W in power, in order to melt the portion 11 of the first plate 10. When the generating power of the laser beam is less than 5W, the portion 11 of the first plate 10 cannot be melted by the heat of the laser beam which is stored up in the first plate 10. When the generating power of the laser beam is more than 100W, the portion 11 of the first plate 10 may vaporize or may be transmuted.

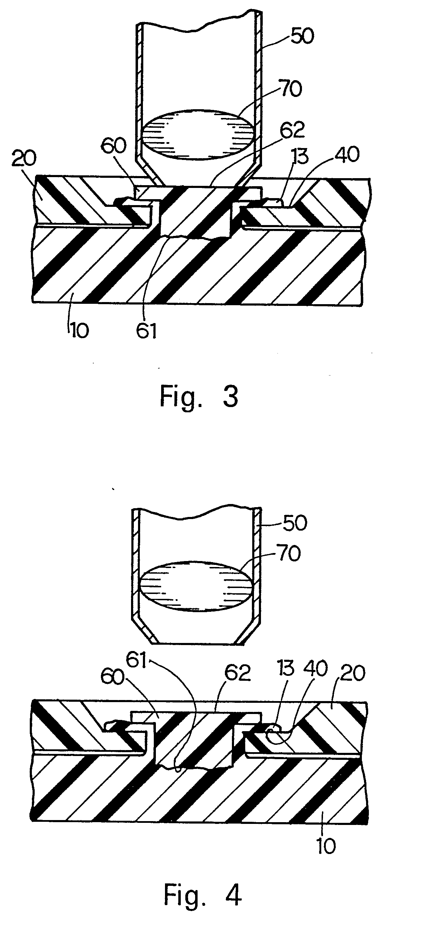

As shown in FIG. 3, a fifth step of the process includes pressing the insertion 60 into the first kind of synthetic resin melted from the portion 11 of the first plate 10, after stopping a irradiation by the laser beam. The first kind of synthetic resin melted from the first plate 10 is pushed out through the space defined between the insertion 60 and the inner peripheral edge 30 of the second plate 20, so that a lip ring 13 of the first kind of synthetic resin is formed on an outer surface 40 of the second plate 20. The top surface 62 of the insertion 60 preferably is pushed by the nozzle 50 of the laser beam. Alternatively, the top surface 62 of the insertion 60 may be pushed by another device instead of the nozzle 50 of the laser beam. The insertion 60 also may be inserted into the melted first plate 10 during irradiation by the laser beam.

A sixth step of the process includes removing the nozzle 50 of the laser beam from the top surface 62 of the insertion 60 and cooling the first plate 10. The first plate 10 then is joined to the second plate 20 through the lip ring 13 thereof, and the plurality of projections of the portion 11 of the first plate 10 engage with the plurality of recesses of the contact surface 61 of the insertion 60.

Therefore, by this process, the first kind of synthetic resin can be joined securely to the second kind of synthetic resin.

As has been described above, according to the process for joining different kinds of synthetic resins of the present invention, one kind of synthetic resin can be joined securely to a different kind of synthetic resin or other material without any mechanical device. Further techniques for joining different kinds of synthetic resins and other materials may be found in the applications owned by applicants' assignee, filed in European Patent Office concurrently with the present application and, all entitled "A Process for Joining Different Kinds of Synthetic Resins".

It should be apparent to one skilled in the art that the above-described embodiments are merely illustrations of a few of the many possible specific embodiments of the present invention. Numerous and varied other arrangements can be devised readily by those skilled in the art without departing from the spirit and scope of the invention, which is defined by the following claims.

CLAIMS:

1. A process for joining a first plate (10) comprising a first kind of synthetic resin adapted to absorb the heat of a laser beam to a second plate (20) having an inner peripheral edge (30) defining a hole with a portion (11) of the first plate (10) within the hole, characterized in that an insert (60), formed of a substance adapted to transmit a laser beam, is positioned on the portion (11) of the first plate (10) within the hole, a space being defined between the insert (60) and the inner peripheral edge (30) of the second plate (20), with a contact surface (61) of the insertion (60) contacting the portion (11) of the first plate (10), the insert (60) is exposed to a laser beam, and pressing into the first kind of synthetic resin melted from the first plate (10) by heat from the laser beam, whereby the melted resin is pushed out through the space defined between the insert (60) and the inner peripheral edge (30) of the second plate (20) onto an outer surface (40) of the second plate (20) to form a lip ring (13) of the first kind of synthetic resin linking the second plate (20) to the first plate (10).

2. A process according to Claim 1, characterized in that the insert (60) comprises glass, polypropylene or styrene/acrylonitrile copolymer.

3. A process according to Claim 1 or 2, characterized in that the first kind of synthetic resin comprises styrene/acrylonitrile copolymer having an absorptive additive.

4. A process according to Claim 3, characterized in that the additive comprises carbon black.

- 9 -

0160425

5.   A  process  according  to  Claim  3  or  4, characterized  in  that  the  styrene/acrylonitrile copolymer is reinforced with glass filler.

6.   A  process  according  to  Claim  1  or  2, characterized  in  that  the  first  kind  of  synthetic resin  of  the  first  plate  (10)  comprises  polypropylene having carbon black as an absorptive additive.

7.   A process according to Claim 1, characterized in  that  the  insert  (60)  comprises  of  a  second  kind of  synthetic  resin  and  a  surface  (61)  of  the  insert (60)  adjacent  to  the  first  plate  (10)  is  melted by  the  heat  stored  up  in  the  first  plate  (10),  so that  during  the  pressing  step,  the  melted  first kind  of  synthetic  resin  is  forced  into  recesses formed  in  the  surface  (61)  of  the  insert  (60)  and the  second  kind  of  synthetic  resin  melted  from  the surface  (61)  of  the  insert  (60)  is  forced  into  recesses formed  in  the  first  plate  (10),  then  after  the  cooling step  the  insertion  (60)  is  held  to  the  first  plate (10) thereby.

8.   A  process  according  to  Claim  7,  characterized in  that  the  insert  (60)  further  comprises  a  portion disposed  above  the  outer  surface  (40)  of  the  second plate  (20)  and  having  a  diameter  greater  than  the diameter  of  the  hole,  whereby  the  insert    (60) may  be  inserted  only  until  the  said  large  diameter portion  abuts  against  the  outer  surface  (40)  of the second plate (20).

9.   A  process  according  to  any  preceding  Claim, characterized  in  that  the  laser  beam  is  generated by  a  Nd:YAG  laser,  Nd:glass  laser,  ruby  laser,  helium: neon  (He:Ne)  gas  laser,  Krypton  (Kr)  gas  laser, argon  (Ar)  gas  laser,  hydrogen  $(H_2)$  gas  laser  or nitrogen $(N_2)$ gas laser.

Fig. 1

Fig. 2

Fig. 3

Fig. 4

0160425

Fig. 5

Fig. 6

0160425

PRIOR ART

Fig. 7